(19) **Europäisches Patentamt**

**European Patent Office**

**Office européen des brevets**

(11) **EP 1 281 934 A1**

(12) **DEMANDE DE BREVET EUROPEEN**

(43) Date de publication:
**05.02.2003 Bulletin 2003/06**

(51) Int Cl.⁷: **G01C 22/00**, G01P 1/07,
G01P 3/44, G08C 17/02

(21) Numéro de dépôt: **02017123.7**

(22) Date de dépôt: **30.07.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **03.08.2001 FR 0110517**

(71) Demandeur: **MAVIC S.A.
74370 Metz-Tessy (FR)**

(72) Inventeur: **Montagnon, Bruno
74370 Metz-Tessy (FR)**

(74) Mandataire: **Lejeune, Benoit
Salomon S.A.
D.J.P.I.
74996 Annecy Cedex 09 (FR)**

(54) **Dispositif de mesure des paramètres de roulage d'une bicyclette**

(57) L'invention concerne un dispositif de mesure des paramètres de roulage d'une bicyclette comprenant un capteur (26) apte à réagir à un tour de révolution d'un organe mobile en rotation par un changement d'état et opérant selon un cycle de changements d'état, le capteur étant prévu pour être monté sur un organe rotatif de la bicyclette, un circuit d'émission (23) ayant une antenne (44), un circuit de réception (24) ayant une antenne (46).

Le circuit d'émission comprend un circuit de calcul (34, 36) d'une valeur du paramètre de roulage à partir du signal issu du capteur, un émetteur (43) connecté à l'antenne (44) pour transmettre ladite valeur vers le dispositif récepteur (24) et un circuit (58, 60, 62) d'optimisation pour activer l'émission de l'émetteur (43) à des instants indépendants des changements d'état du capteur (26).

FIG.3

## Description

L'invention concerne un dispositif de mesure des paramètres de roulage d'une bicyclette. L'invention concerne également une bicyclette équipée dudit dispositif.

Notamment l'invention concerne un dispositif de mesure de la vitesse de rotation d'une roue et /ou de la cadence de pédalage.

Pour mesurer la vitesse de rotation d'un organe tel qu'une roue ou une manivelle de pédalier, généralement on utilise comme capteur un relais Reed qui est monté sur le cadre et qui est activé par un aimant fixé sur l'organe mobile.

La demande de brevet FR 2 794 715 décrit un tel dispositif pour la mesure de cadence de pédalage. L'aimant est monté sur la manivelle et il active un relais Reed fixé sur le cadre.

Le brevet EP 402 620 est relatif à un dispositif de ce type mesurant la vitesse de rotation de la roue. Ce dispositif présente en plus la particularité d'avoir une liaison sans fil entre l'unité de traitement qui est piloté par le relais Reed et l'unité d'affichage qui se trouve sur le cintre. Le capteur et l'unité de traitement sont montés sur l'un des haubans de la fourche, l'aimant est attaché à un rayon de la roue, et l'unité d'affichage est installée sur le cintre de direction.

Ici encore le capteur est monté sur le cadre de la bicyclette, et c'est un élément passif en l'occurrence l'aimant qui est fixé sur l'organe en mouvement. De plus, pour ce dispositif sans fil, c'est le passage de l'aimant devant l'ampoule Reed qui active l'émetteur de l'unité de traitement. La mesure de la vitesse de rotation se fait en mesurant la durée qui s'écoule entre deux émissions successives de l'émetteur. Autrement dit l'émetteur est activé à chaque tour de roue, à chaque tour il émet en direction du récepteur et à chaque tour le récepteur de l'unité de traitement réactualise son calcul de la vitesse. Pour une bicyclette qui roule à 36km/h, la roue fait environ 5 tours par seconde. Cela signifie que cinq fois dans une seconde l'émetteur émet en direction du récepteur et la mesure de vitesse est recalculée.

A chaque émission l'émetteur prélève de l'énergie sur la pile.

Ces dispositifs sans fil sont pratiques à installer du fait justement de la connexion sans fil entre l'émetteur et le récepteur. Toutefois avec ces dispositifs on a une fréquence de rafraîchissement de la mesure qui est au-delà de ce qui est réellement nécessaire, et surtout on a une consommation d'énergie importante au niveau de l'émetteur.

Un autre inconvénient de ces dispositifs est qu'il faut ajuster la position de l'aimant par rapport à l'ampoule Reed, pour que l'aimant passe bien devant l'ampoule à une distance correcte. Il arrive fréquemment que lors d'un démontage de la roue ou bien lors du transport de la bicyclette l'aimant bouge de façon accidentelle. Il faut dans ce cas le réajuster.

En outre, la transmission entre l'émetteur et le récepteur se fait en général à l'aide d'antennes directionnelles dans le but de diminuer la puissance d'émission nécessaire, ainsi que les émissions parasites. Pour assurer un bon fonctionnement, ces antennes ont besoin d'être orientées de façon précise l'une par rapport à l'autre, si bien qu'on n'a jamais pensé jusqu'à présent à monter l'émetteur et le récepteur autrement que tous les deux fixés sur le cadre de la bicyclette pour qu'ils soient immobiles ou quasiment immobiles l'un par rapport à l'autre.

Un but de l'invention est de proposer un dispositif de mesure sans fil qui présente une consommation réduite par rapport aux dispositifs de l'art antérieur.

Un autre but de l'invention est de proposer un dispositif de mesure qui est plus simple à installer sur la bicyclette.

D'autres buts et avantages de l'invention apparaîtront au cours de la description qui va suivre.

Le dispositif de mesure des paramètres de roulage d'une bicyclette comprend :

un capteur apte à réagir à un tour de révolution d'un organe mobile en rotation par un changement d'état et opérant selon un cycle de changements d'état, le capteur étant prévu pour être monté sur un organe rotatif de la bicyclette, un circuit d'émission ayant une antenne, un circuit de réception ayant une antenne.

Il est caractérisé par le fait que le circuit d'émission comprend un circuit de calcul d'une valeur du paramètre de roulage à partir du signal issu du capteur, un émetteur connecté à l'antenne pour transmettre ladite valeur vers le dispositif récepteur et un circuit d'optimisation pour activer l'émission de l'émetteur à des instants indépendants des changements d'état du capteur.

La bicyclette est caractérisée par le fait qu'elle est équipée du dispositif en question avec un circuit d'émission monté sur la partie du pédalier et / ou de l'une des deux roues qui est mobile en rotation.

L'invention sera mieux comprise en se référant à la description ci-dessous et aux dessins en annexe qui lui sont attachés.

La figure 1 est une vue de côté d'une bicyclette équipée du dispositif selon l'invention.
La figure 2 représente en vue de dessus le compteur monté sur le cintre.
La figure 3 est un schéma bloc qui illustre l'invention.
La figure 4 montre le capteur de la figure 3 dans une position désactivée.
La figure 5 représente de façon schématique la trame du message transmis.
La figure 6 est une vue partielle de la bicyclette de la figure 1 qui illustre la notion d'instant optimum d'émission.

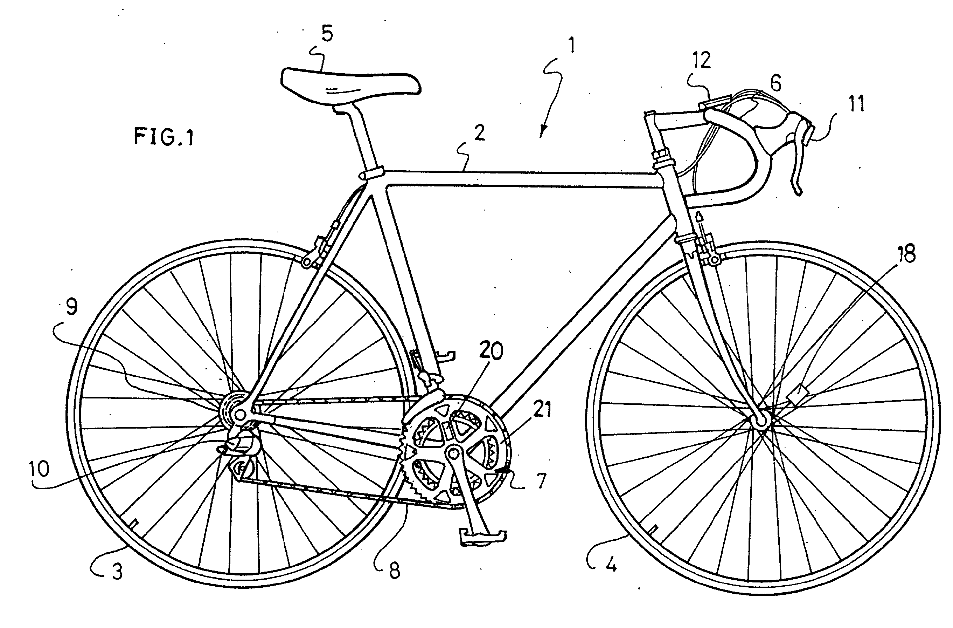

La figure 1 représente une bicyclette 1 qui comprend un cadre 2, des roues arrière et avant 3 et 4, une selle 5, un cintre de direction 6 et un groupe de transmission comprenant un pédalier avant 7, une chaîne de transmission 8, une cassette arrière de pignons 9 et un dérailleur arrière 10.

Ces éléments ne sont exposés naturellement qu'à titre indicatif pour permettre de mieux comprendre l'invention. Toute construction connue et appropriée convient et il existe de nombreux équivalents techniques de construction.

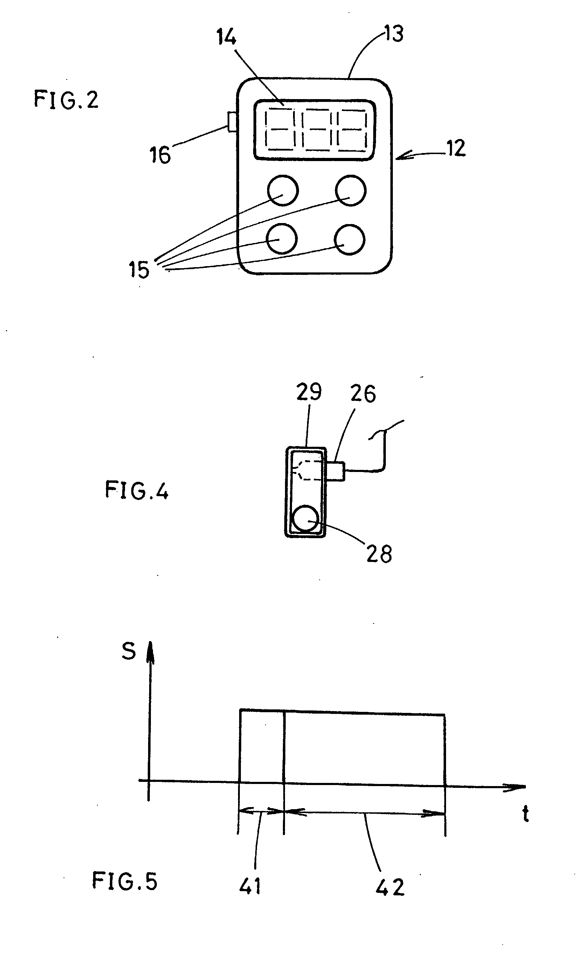

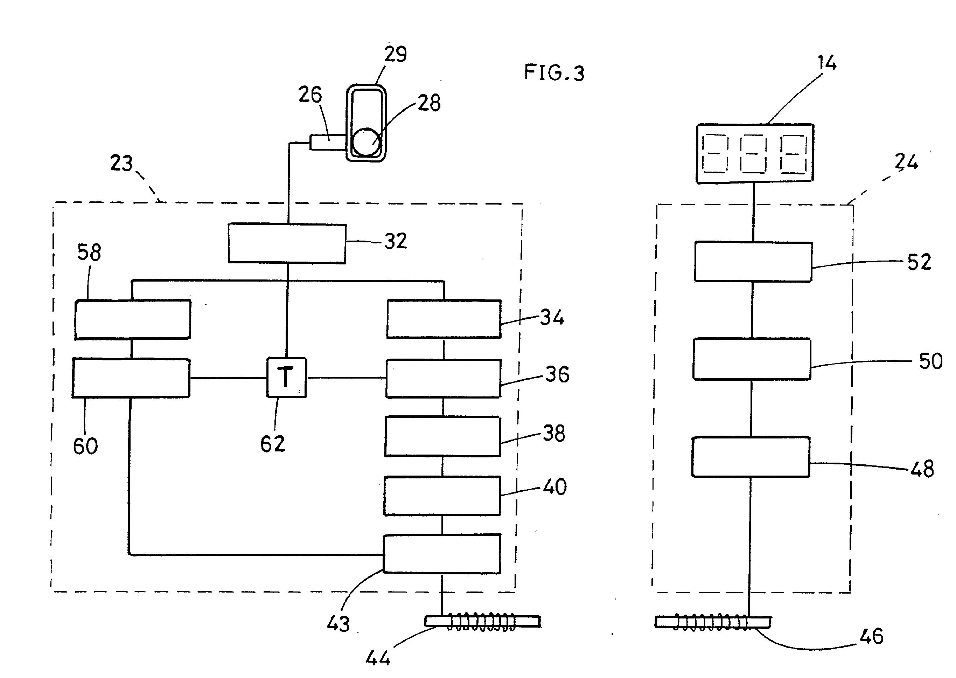

La figure 1 représente par ailleurs ce que l'on dénomme communément un compteur 12 qui est monté sur le cintre 6. Comme cela est illustré en figure 2, le compteur peut être réalisé sous la forme d'un boîtier de compteur 13 avec une unité d'affichage 14 qui est par exemple un afficheur numérique à cristaux liquides, et des boutons de fonction 15 pour piloter la fonction affichée par l'unité d'affichage. On peut prévoir également un bouton 16 de marche/arrêt.

A l'intérieur, le boîtier renferme un circuit électronique de réception qui pilote l'unité d'affichage et qui sera décrit ultérieurement, ainsi qu'une pile d'alimentation.

Selon le mode de réalisation illustré, le compteur 12 est en relation avec un premier circuit électronique d'émission logé dans un boîtier 18 associé à la roue avant. Ce circuit qui sera décrit plus en détail ultérieurement est destiné à mesurer la vitesse de rotation de la roue, et partant de là à déterminer par exemple la vitesse linéaire, la distance parcourue, la moyenne de vitesse ainsi éventuellement que d'autres paramètres.

La particularité du boîtier 18 est qu'il est monté sur la partie tournante de la roue et de ce fait il tourne avec la roue autour de l'axe du moyeu. La figure 1 représente le boîtier 18 monté sur un rayon. Ce n'est pas limitatif, on pourrait monter le boîtier sur d'autres organes mobiles de la roue, et par exemple la jante, les flasques d'accrochage des rayons ou le corps de moyeu. Une autre possibilité serait d'utiliser le corps de moyeu en tant que boîtier, ou d'intégrer le boîtier dans le corps de moyeu ou dans la jante.

Selon une autre variante on pourrait monter le boîtier 18 sur la roue arrière.

Un autre circuit électronique d'émission est logé dans un boîtier 20 associé au pédalier. La figure 1 représente le boîtier 20 monté sur un plateau 21 du groupe de transmission. Ce n'est pas limitatif, le boîtier pourrait être monté sur l'une des manivelles, ou encore l'une des manivelles pourrait avoir une cavité formant le boîtier. Ce qui est important c'est que le boîtier 20 tourne autour de l'axe du pédalier avec la rotation des manivelles.

Le circuit logé dans le boîtier 20 est destiné à mesurer la cadence de pédalage et éventuellement d'autres paramètres dérivés.

Ces deux mesures des vitesses de rotation de la roue et du pédalier ne sont pas limitatives pour l'invention. En d'autres termes, on pourrait appliquer l'invention à l'une ou l'autre d'elles ainsi d'ailleurs qu'à tout élément de la bicyclette ayant un mouvement de révolution autour d'un axe.

Pour simplifier la compréhension de l'invention, celle-ci va être maintenant décrite dans l'application particulière à la mesure de la cadence de pédalage et donc aux deux circuits d'émission et de réception 23 et 24 contenus dans les boîtiers 13 et 20.

Le premier élément du circuit d'émission 23 est un capteur qui est apte à réagir à un tour de révolution de l'organe sur lequel il est monté par un changement d'état à un moment donné de la période de révolution de l'organe mobile. Selon le mode de réalisation illustré, le capteur est un relais Reed 26 dont la particularité est que l'aimant qui provoque la fermeture des contacts est une pastille ronde 28 logée dans un petit compartiment longiligne 29, l'ampoule étant plaquée contre le compartiment, vers l'une de ses extrémités. Dans la figure 1, le compartiment est représenté dans la position où l'aimant est devant l'ampoule Reed. Il est représenté en figure 4 dans la position opposée, qui serait atteinte après une rotation du plateau de 180 degrés. Par gravité l'aimant tombe vers l'autre extrémité du compartiment, l'ampoule Reed se trouve alors désactivée. Ainsi un cycle de changements d'état du capteur comprend une fermeture et une ouverture du relais Reed qui se produisent avec le mouvement de l'aimant dans son compartiment. Comme le relais est embarqué sur l'organe mobile avec l'aimant, il n'y a ici aucun réglage à faire au niveau du capteur.

L'ampoule Reed est reliée à un premier circuit 32 de remise en forme du signal. Le signal en sortie de ce circuit est un signal périodique qui a la même fréquence que la fréquence de rotation du plateau.

Il est dirigé selon deux lignes différentes. Dans la première ligne, le signal est adressé à un circuit de calcul 34 qui détermine la durée du cycle du relais Reed à chaque période de révolution du plateau, c'est à dire la cadence de pédalage instantanée par exemple en se basent sur la fermeture du relais.

Un circuit auxiliaire 36 de lissage et de filtrage détermine à partir des valeurs de cadence instantanée mesurées au cours d'une durée déterminée une valeur représentative de la cadence de pédalage. Cette valeur représentative est calculée par lissage sur une durée qui est comprise par exemple entre 2 et 5 secondes. Cette durée déterminée est en rapport avec la durée qui sépare deux émissions successives de l'émetteur en direction du récepteur. En outre, la fonction de filtrage du circuit 36a a pour but d'écarter les valeurs parasites qui n'auraient pas de cohérence avec les valeurs voisines.

Le circuit suivant 38 est un convertisseur analogique numérique qui convertit la valeur représentative issue du circuit 36 en une valeur numérique. Plusieurs modes de conversion peuvent convenir. Notamment le signal peut être converti en binaire codé décimal ou encore en hexadécimal. Ce qui est important est que le signal issu du circuit 38 soit un signal numérique.

Ce signal numérique est envoyé dans un circuit 40 de constitution de la trame qui sera émise par l'émetteur 43 en direction du récepteur. La trame est représentée de façon schématique dans la figure 5 à titre indicatif. Elle comprend un mot adresse 41. Ce mot adresse est un code numérique préenregistré qui est également chargé dans le récepteur. Il permet au récepteur d'identifier les messages qui lui sont bien destinés. La trame comprend en outre un message de données 42 qui est issu du circuit 40. D'autres mots peuvent être ajoutés à la trame le cas échéant pour des fonctions additionnelles.

L'émetteur 43 est de tout type approprié. La fréquence de sa porteuse est de préférence comprise entre 10 et 150 kHz ou mieux entre 30 et 50 kHz pour une émission à faible distance où le corps du cycliste sera transparent. La trame est modulée sur la porteuse en modulation de fréquence ou d'amplitude ou autre. De préférence on utilise une transmission en modulation de fréquence qui se prête bien à la transmission de signaux numériques.

Le signal est émis par l'émetteur depuis une antenne directionnelle 44. Selon le mode de réalisation représenté, l'antenne est formée par une bobine enroulée sur un bâtonnet de ferrite. D'autres modes de construction de l'antenne pourraient aussi convenir. Ce qui est important est que l'antenne soit directive. Ceci permet de diminuer la puissance de l'émetteur et donc sa consommation. En outre, on évite de polluer l'environnement de la bicyclette.

Le signal de l'émetteur est reçu par l'antenne 46 puis traité par le circuit de réception 24 qui est situé au niveau du cintre dans le boîtier 13. L'antenne 46 est de même type que l'antenne émettrice 44, et par exemple comme cela est représenté, elle est formée par une bobine enroulée sur un noyau de ferrite.

En aval de l'antenne, le circuit de réception 24 comprend un récepteur 48 qui reçoit la trame de données, l'envoie au circuit de décodage 50 qui décode l'adresse destinataire, et isole le message de données 42. Le circuit suivant 52 met en forme le signal de données issu du circuit 52 et pilote l'afficheur 14 pour qu'il affiche une valeur représentative de ce signal. Cette valeur peut être une valeur numérique sous forme d'affichage digital. En variante on pourrait afficher cette valeur sous forme de pictogramme, par exemple une succession de traits figurant dans ses différentes positions l'aiguille d'un compteur de vitesse de type mécanique.

On peut donner au circuit 52 d'autres fonctions de traitement du signal de données issu du circuit 50. Notamment on pourrait lui conférer des fonctions de calcul de moyenne de la cadence de pédalage sur un temps déterminé, sur la durée de la sortie ou autre. On pourrait donner au circuit 52 les fonctions de calcul d'autres fonctions qui sont usuellement utilisées sur les compteurs du commerce. C'est au niveau de ce circuit 52 que seraient reliés les contacteurs associés aux boutons de fonction 15.

Dans le cas de la mesure d'une vitesse de rotation de la roue, le principe de mise en forme du signal issu du capteur de vitesse, de traitement, de transmission, de décodage et d'affichage serait le même que ce qui a été décrit précédemment. Le circuit en aval de l'afficheur aurait en plus pour fonction de calculer la vitesse linéaire de la bicyclette à partir de la vitesse de rotation de la roue, et d'autres fonctions usuellement utilisées comme le calcul de la vitesse moyenne, de la distance parcourue, la distance parcourue cumulée, et d'autres fonctions encore. L'affichage de ces différentes fonctions serait piloté par les boutons de fonction 15.

Au sujet de l'émetteur, pour éviter que le mouvement de l'aimant dans son compartiment soit influencé par la force centrifuge imprimée par la rotation de la roue, on peut prévoir de monter le boîtier 18 le plus près possible de l'axe de la roue. En variante, au lieu d'embarquer l'aimant sur la roue, on pourrait le monter à poste fixe sur le cadre de bicyclette, par exemple sur un hauban de la fourche. On pourrait aussi utiliser un autre capteur qu'une ampoule Reed, par exemple un accéléromètre ou un autre capteur apte à réagir à sa position autour d'un axe de révolution.

Le circuit 24 pourrait aussi être conçu pour traiter des données issues de plusieurs émetteurs différents, par exemple un au niveau du pédalier et un au niveau de la roue.

Dans tous les deux cas, le circuit émetteur, son capteur, et son antenne sont embarqués sur l'organe en rotation et tournent avec lui autour de son axe de rotation.

Pour revenir à l'application à la cadence de pédalage, comme le boîtier qui contient l'émetteur et l'antenne est embarqué sur le plateau, l'orientation de l'antenne varie avec la rotation du plateau. Un circuit d'optimisation est dans ces conditions chargé de piloter le moment où l'émetteur est activé. L'instant optimum d'émission intervient lorsque les deux antennes 44 et 46 sont parallèles et alignées et où elles sont le plus proches l'une de l'autre. Cette optimisation permet de diminuer la consommation de l'émetteur. Tout d'abord l'émetteur ne va pas émettre à chaque tour de pédalier. De plus aux instants où il émet, les conditions de transmission avec le récepteur sont optimales. Dans ces conditions l'émission requiert une puissance faible.

Pour que les antennes soient parallèles, on les oriente toutes les deux dans le plan longitudinal et vertical défini par le cadre, ou dans une orientation proche de ce plan.

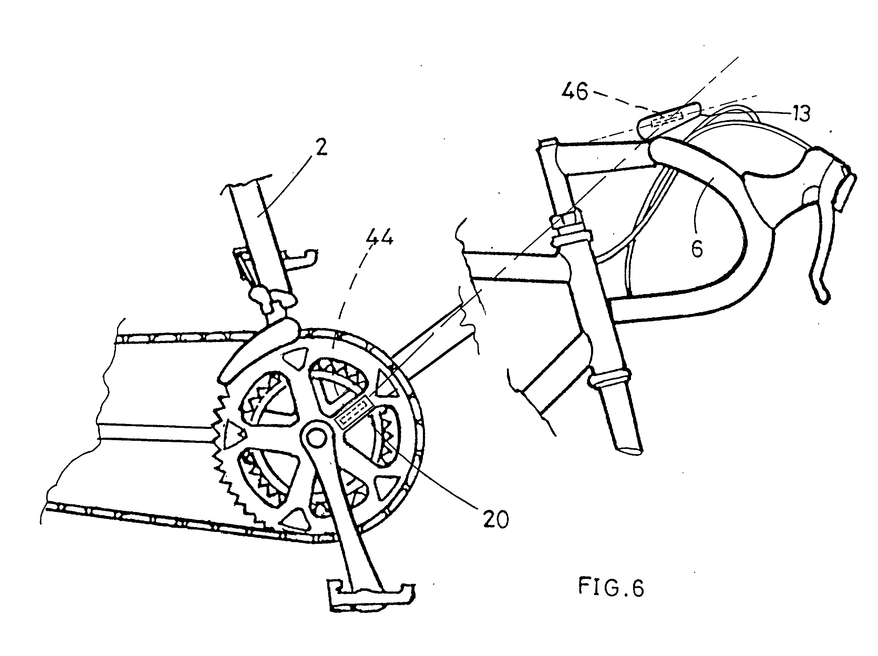

Si l'orientation de l'antenne réceptrice dans son boîtier ne permet pas l'alignement de l'antenne émettrice avec l'antenne réceptrice, comme l'illustre la figure 6, on préfère comme instant optimum l'instant où l'antenne émettrice est dirigée vers l'antenne réceptrice, dans sa position où elle est la plus proche de l'antenne réceptrice. Ceci convient si à cet instant les directions des deux antennes forment entre elles un angle voisin de 180 degrés, et de préférence supérieur à 135 degrés. On sait en effet qu'un défaut d'alignement des antennes crée peu de pertes de rendement dans la transmission tant que le défaut d'alignement est limité à quelques dizaines de degrés.

Si ce n'est pas possible, ce qui est le cas pour l'antenne émettrice de la roue avant, on préfère comme instant optimum l'instant où les deux antennes sont parallèles.

A cet instant optimum on dira que l'antenne émettrice a son orientation optimale.

En variante, on pourrait introduire un second instant optimum et une seconde orientation optimale au cours d'un cycle de révolution du plateau ou de la roue, à l'instant où l'antenne émettrice est diamétralement opposée à sa première orientation optimale.

En ce qui concerne la durée d'émission, celle-ci est très courte, l'émission dure quelques centièmes de secondes, si bien qu'on peut considérer que les deux antennes gardent la même orientation relative pendant toute l'émission.

Le circuit d'optimisation qui pilote l'émetteur 42 comprend un circuit d'orientation 58. Ce circuit prélève sur le circuit 32 de mise en forme l'information de fermeture ou d'ouverture de l'ampoule Reed correspondant au changement d'état du capteur. Ceci permet à chaque tour de pédalier d'initialiser l'orientation du plateau et de l'antenne périodiquement dans leur révolution autour de l'axe du pédalier.

A partir de ces valeurs d'initialisation, le circuit 58 calcule le temps estimé au bout duquel le pédalier aura atteint son orientation optimale.

L'instant optimum est ici déterminé par exemple par extrapolation. De la période de rotation du pédalier au cours du cycle de rotation précédent compte tenu de l'angle de rotation que le plateau doit parcourir entre son orientation d'initialisation et son orientation optimale, on déduit une valeur de l'instant optimum. En d'autres termes, si l'on désigne par $T_n$ l'instant optimum à la nième rotation du plateau, $t_n$ l'instant d'initialisation, et x l'angle entre l'orientation optimale du plateau et son orientation, l'instant $T_n$ se calcule par la formule suivante :

$$T_n = t_n + (t_n - t_{n-1}) * (360/x)$$

Il s'agit en fait d'une valeur estimée du véritable instant où l'antenne passe dans son orientation optimale.

Toute autre technique appropriée peut également convenir. Notamment on pourrait affiner l'estimation en réalisant l'extrapolation sur plusieurs cycles de rotation du plateau ou par une technique d'optimisation.

A chaque instant optimum, le circuit 58 adresse un signal d'instant optimum au circuit 60 de pilotage de l'émetteur.

Un circuit d'horloge 62 envoie par ailleurs au circuit 60 un signal périodique. La période de ce signal est la période à laquelle on souhaite que la valeur affichée sur l'afficheur soit rafraîchie. Comme indiquée précédemment, cette période de rafraîchissement peut être de l'ordre de 2 à 5 secondes. On peut d'ailleurs utiliser le circuit d'horloge pour piloter le circuit 36 de lissage. La période de rafraîchissement peut varier selon que la cadence de pédalage est élevée ou au contraire faible. Notamment on peut réduire la période lorsque la cadence de pédalage est très faible pour éviter de retarder de façon excessive la transmission des données en direction du récepteur.

Le circuit 60 de pilotage de l'émetteur détermine l'instant où il reçoit du circuit 58 le premier signal d'instant optimum qui intervient à la fin de chaque période de rafraîchissement. A cet instant, il adresse à l'émetteur un signal d'activation qui active son émission.

En d'autres termes, à la fin de chaque période de rafraîchissement, l'émetteur reste en veille et attend un signal d'instant optimum pour lancer son émission. Dans ces conditions il lance son émission non pas à chaque tour de plateau, mais lors du premier passage de l'antenne dans son orientation optimale qui suit la fin d'une période de rafraîchissement. A peu de choses près, la durée qui sépare deux émissions successives de l'émetteur correspond à la période de rafraîchissement. L'émetteur reste inactif lors des signaux d'instant optimum suivants, jusqu'à ce qu'une nouvelle période de rafraîchissement soit écoulée.

Pour la cadence de pédalage, on compte qu'une plage courante s'étend de 40 à 200 tours par minute soit grossièrement de 1 à 3 tours par seconde. Dans ces conditions, un émetteur sans fil de l'art antérieur émettrait de 1 à 3 fois par seconde selon la cadence. Avec l'invention, l'émetteur est activé une fois toutes les deux à cinq secondes, selon la période de rafraîchissement choisie. Le nombre d'émissions dans un temps donné est nettement plus faible, de plus il est indépendant de la cadence elle-même.

Ceci est encore plus net avec une roue. Si on prend une vitesse de rotation de 5 tours par secondes, une période de rafraîchissement de 2 secondes, l'émetteur selon l'invention émet 10 fois moins qu'un émetteur traditionnel qui émettrait à chaque tour de roue.

De façon avantageuse, les circuits sont réalisés dans une technologie CMOS ou équivalente à très faible consommation d'énergie et c'est la puissance nécessaire à l'émission qui consomme l'énergie principale. On comprend dans ces conditions que le dispositif de l'invention permet de réaliser une économie significative d'énergie électrique.

En outre, le dispositif est plus simple à installer car le capteur ne nécessite pas d'ajustement particulier.

Naturellement l'invention n'est pas limitée à la description qui vient d'en être faite et des variantes sont possibles.

En particulier les actions qui se déclenchent à des instants déterminés pourraient être temporisées d'un temps déterminé.

De plus les circuits qui ont été décrits ne sont pas limitatifs, et les fonctions qu'ils remplissent ne sont pas limitatives non plus. Certaines fonctions décrites au niveau du récepteur pourraient être réalisées au niveau de l'émetteur. Notamment la fonction de calcul d'une valeur moyenne si elle existe pourrait être calculée au niveau de l'émetteur. Dans ces conditions le message de données transmis par l'émetteur contiendrait la valeur momentanée et la valeur moyenne. La valeur envoyée à l'affichage serait sélectionnée au niveau du récepteur. En outre, des circuits décrits comme distincts pourraient fusionner.

L'idée générale de l'invention est en fait de réaliser au niveau du boîtier de l'émetteur un traitement au moins partiel du signal de mesure et d'activer l'émetteur à des instants indépendants de la période de rotation de la roue ou du plateau pour qu'il transmette un signal enrichi en direction du compteur. Ces instants où l'émetteur est activé sont optimisés en fonction de la position relative des deux antennes.

## Revendications

1. Dispositif de mesure des paramètres de roulage d'une bicyclette comprenant:

     un capteur (26) apte à réagir à un tour de révolution d'un organe mobile en rotation par un changement d'état et opérant selon un cycle de changements d'état, le capteur étant prévu pour être monté sur un organe rotatif de la bicyclette,
     un circuit d'émission (23) ayant une antenne (44),
     un circuit de réception (24) ayant une antenne (46),

     **caractérisé par le fait que** le circuit d'émission comprend un circuit de calcul (34, 36) d'une valeur du paramètre de roulage à partir du signal issu du capteur, un émetteur (43) connecté à l'antenne (44) pour transmettre ladite valeur vers le dispositif récepteur (24) et un circuit (58, 60, 62) d'optimisation pour activer l'émission de l'émetteur (43) à des instants indépendants des changements d'état du capteur (26).

2. Dispositif selon la revendication 1, **caractérisé par le fait que** le circuit d'optimisation comprend un circuit d'orientation (58) déterminant au moins un instant optimum d'émission au cours de la période d'un cycle de changement d'état du capteur (26).

3. Dispositif selon la revendication 2, **caractérisé par le fait que** le circuit d'orientation (58) calcule l'instant optimum à partir d'un instant de changement d'état du capteur et d'une fraction de période d'un cycle de changement d'état déterminée par extrapolation sur la période d'un ou plusieurs cycles de changement d'état précédents.

4. Dispositif selon la revendication 2, **caractérisé par le fait que** le circuit d'optimisation comprend un circuit d'horloge (62) qui envoie un signal périodique.

5. Dispositif selon la revendication 4, **caractérisé par le fait que** la période du circuit d'horloge (62) est comprise entre 2 et 5 secondes.

6. Dispositif selon les revendications 3 et 4, **caractérisé par le fait que** le circuit d'optimisation comprend un circuit de pilotage (60) de l'émetteur (43) qui détermine un instant optimum d'émission comme étant le premier instant optimum suivant un signal périodique de l'horloge et qui active l'émetteur à cet instant.

7. Dispositif selon la revendication 1, **caractérisé par le fait que** le capteur (26) est un relais Reed placé contre un compartiment longiligne (29) dans lequel est logé un aimant (28).

8. Dispositif selon la revendication 1, **caractérisé par le fait que** le circuit de calcul comprend un circuit de conversion numérique (38).

9. Dispositif selon la revendication 4, **caractérisé par le fait que** le circuit de calcul comprend un circuit de lissage (36) travaillant sur une période égale à la période du circuit d'horloge (62).

10. Bicyclette comprenant un cadre (2), deux roues (3, 4), un cintre (6), un pédalier (7), **caractérisée par le fait qu'**elle est équipée d'un dispositif selon l'une quelconque des revendications précédentes, avec un circuit émetteur monté sur la partie du pédalier et / ou de l'une des deux roues qui est mobile en rotation.

FIG.1

EP 1 281 934 A1

FIG.2

FIG.4

FIG.5

8

FIG.3

EP 1 281 934 A1

FIG.6

EP 1 281 934 A1

| | Office européen des brevets | **RAPPORT DE RECHERCHE EUROPEENNE** | Numéro de la demande |
| --- | --- | --- | --- |
| | | | EP 02 01 7123 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
| --- | --- | --- | --- |
| E | FR 2 807 240 A (CAMPAGNOLO SRL) 5 octobre 2001 (2001-10-05) * page 4, ligne 35 - page 6, ligne 2 * * page 9, ligne 30 - page 11, ligne 31; figures 1-5 * | 1,2,4-6, 8,10 | G01C22/00 G01P1/06 G01P3/44 G08C17/02 |
| X | EP 0 650 031 A (CASIO COMPUTER CO LTD) 26 avril 1995 (1995-04-26) * colonne 3, ligne 31 - colonne 4, ligne 51 * | 1,8,10 | |

| DOMAINES TECHNIQUES RECHERCHES (Int.Cl.7) |
| --- |
| G01C G01P G08C |

Le présent rapport a été établi pour toutes les revendications

| Lieu de la recherche | Date d'achèvement de la recherche | Examinateur |
| --- | --- | --- |
| LA HAYE | 20 novembre 2002 | Pflugfelder, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 02 01 7123

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-11-2002

| Document brevet cité au rapport de recherche | | Date de publication | Membre(s) de la famille de brevet(s) | | Date de publication |
|---|---|---|---|---|---|
| FR 2807240 | A | 05-10-2001 | IT | TO20000296 A1 | 01-10-2001 |
| | | | CN | 1319975 A | 31-10-2001 |
| | | | CZ | 20011102 A3 | 14-11-2001 |
| | | | DE | 10115284 A1 | 04-10-2001 |
| | | | FR | 2807240 A1 | 05-10-2001 |
| | | | JP | 2001352263 A | 21-12-2001 |
| | | | US | 2001027359 A1 | 04-10-2001 |
| EP 0650031 | A | 26-04-1995 | JP | 7104042 A | 21-04-1995 |
| | | | JP | 7147701 A | 06-06-1995 |
| | | | DE | 69412564 D1 | 24-09-1998 |
| | | | DE | 69412564 T2 | 24-12-1998 |
| | | | EP | 0650031 A1 | 26-04-1995 |
| | | | HK | 1013435 A1 | 12-05-2000 |
| | | | US | 5511435 A | 30-04-1996 |

EPO FORM P0460

Pour tout renseignement concernant cette annexe : voir Journal Officiel de l'Office européen des brevets, No. 12/82